# EUROPÄISCHE PATENTSCHRIFT

(11) **EP 0 849 506 B1**
(45) Veröffentlichungstag und Bekanntmachung des Hinweises auf die Patenterteilung: **03.07.2002**
(21) Anmeldenummer: 97119534.2
(22) Anmeldetag: 07.11.1997
(51) Int. Cl.: F16H 61/24, G05G 5/03

(54) **Schalteinrichtung mit Federelement zur Wählkrafterzeugung für ein mehrgängiges Zahnräderwechselgetriebe**
Selector device with spring-biasing arrangement for providing selection feel in a multi-ratio gearbox
Dispositif de changement de vitesses avec élément ressort de rappel d'organes de sélection pour transmission multivitesses

(30) Priorität: 19.12.1996 DE 19653171
(43) Veröffentlichungstag der Anmeldung: 24.06.1998
(73) Patentinhaber: Bayerische Motoren Werke Aktiengesellschaft, 80788 München (DE)
(72) Erfinder: Wagner, Norbert, 80339 München (DE); Esser, Peter-Josef, 82229 Seefeld (DE); Rastinger, Bernhard, 81249 München (DE)

(56) Entgegenhaltungen:
- WO-A-83/00398
- DE-A- 1 500 367
- DE-A- 19 520 209
- GB-A- 2 037 916
- US-A- 5 144 854

## Beschreibung

Die vorliegende Erfindung betrifft eine Schalteinrichtung gemäß dem Oberbegriff des Patentanspruches 1.

Eine derartige Schalteinrichtung ist aus der DE 195 20 209 A1 bekannt. Diese Schalteinrichtung weist zwei drehbare und axial verschiebliche Schaltwellen auf. Auf der ersten Schaltwelle sind eine erste Schaltgabel angeordnet, die einer ersten Schaltgasse zugeordnet ist, sowie ein Hebel, der über ein Kugelgelenk mit einem an der zweiten Schaltwelle befestigten Hebel verbunden ist. Auf der zweiten Schaltwelle sind zwei weitere Schaltgabeln vorgesehen. Durch Drehen der ersten Schaltwelle können die einzelnen Schaltgassen angewählt werden. Auf der zweiten Schaltwelle ist zusätzlich ein zweiarmiges Federelement vorgesehen, dessen Federarme versuchen, den ersten Hebel in eine Neutralstellung zu drücken. Bei Verdrehen der ersten Schaltwelle wird die Feder deformiert, wobei für die Anwahl der einzelnen Schaltgassen unterschiedliche Federkräfte zu überwinden sind.

Ferner ist bereits bekannt, die Wählkraft bei einem mehrgängigen Zahnräderwechselgetriebe eines Kraftfahrzeugs mit einer als Hebel ausgebildeten Wählschwinge auf die zentrale Wähl- und Schaltwelle und von dort auf die äußere Schaltung bzw. den Schalthebel zu übertragen. Dies gilt für eine zentrale Wähl- und Schaltwelle, die im Getriebegehäuse verdrehbar und axial verschiebbar ist, wobei durch deren Verdrehung jeweils eine in einer Schaltgasse zu betätigende Schaltkupplung anwählbar und durch deren anschließende axiale Verschiebung Gangstufen schaltbar sind.

Die DE 40 20 160 A1 beschreibt eine Wählschwinge, die gegen die Kraft zumindest eines gehäusefesten Federelements aus ihrer Neutral- in eine Wählendstellung verschwenkbar ist. Wird mittels eines Schalthebels eine Schaltgasse angewählt, so erfolgt eine Verdrehung der Wähl- und Schaltwelle, bei der sich die Wählschwinge aus ihrer mittleren Neutralstellung heraus jeweils gegen gehäusefeste Federelemente bewegt. Bei der anschließenden Schaltbewegung wird die Wähl- und Schaltwelle axial verschoben.

In vielen Fällen liegt die Neutralstellung der Wähl- und Schaltwelle und somit des Schalthebels in der Schaltgasse zum Schalten des dritten oder vierten Ganges.

Bewegt man von dieser Neutralstellung aus den Schalthebel in die Schaltgasse des Rückwärtsganges oder in die für den ersten und zweiten Gang bzw. in die Schaltgasse für den fünften und sechsten Gang, so ist jeweils eine definierte Wählkraft aufzubringen.

Um die Wählkräfte möglichst spielfrei und reibungsarm vom Federelement auf den Wählhebel zu übertragen, beschreibt die DE 40 20 160 A1 eine Linearführung der Wähl- und Schaltwelle in der Wählschwinge, die besonders exakt arbeitet. Dennoch ist bei dieser Ausführung das Zusammenwirken von Federelement und Wählschwinge spielbehaftet. Eine große Haftreibung der Federelemente bedingt eine große Losbrechkraft der Sperrbolzen, die eine hohe Hysterese besitzen. Durch die große Anzahl der Bauelemente ist eine Überlagerung von Federkräften und Toleranzen gegeben. Die aufwendige Konstruktion bedingt eine aufwendige Gehäusebearbeitung und hohe Anforderungen an die Genauigkeit der Bauelemente. So müssen die Sperrbolzen geschliffen werden. Durch Ungenauigkeiten kann ein erhöhtes Querspiel in Wählrichtung in der Neutralstellung des Schalthebels, der Schaltgasse für den dritten und vierten Gang, auftreten. Außerdem ist der Wählkraftverlauf zur Schaltgasse für den fünften und sechsten Gang nicht zufriedenstellend. Notwendige Gehäusedurchbrüche erhöhen die Gefahr einer Undichtigkeit, was im Hinblick auf Lebensdauer-Ölbefüllung zu beachten ist.

Der Erfindung liegt deshalb die Aufgabe zugrunde, für den Fahrer eine spielfreie und reibungsarme haptische Rückmeldung durch die Wählkraft am Schalthebel bereitzustellen.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung besteht das Federelement aus drei gegen Federkraft beweglichen Schlepphebeln, die unter Vorspannung an der Wählschwinge anliegen und diese in ihrer Neutralstellung festlegen.

Die Schlepphebel im Federelement haben den Vorteil, daß das erhöhte Querspiel in Wählrichtung in der Neutralstellung des Schalthebels vermieden wird. Ebenso werden die Nachteile im Wählkraftverlauf vermieden. Das Federelement mit Schlepphebeln besitzt eine geringere Haftreibung und geringere Hysterese.

Anßerdem wirken die drei Schlepphebel und die Feder so zusammen, daß ausgehend von der Neutralstellung der Wähl- und Schaltwelle in einer Schaltgasse drei weitere Schaltgassen jeweils mit mindestens je einer Wählkrafterhöhung anwählbar sind.

Das hat den Vorteil, daß insgesamt in vier Schaltgassen sechs Vorwärtsgänge und ein Rückwärtsgang anwählbar sind und dazu nur eine Feder zur Erzeugung des Wählkraftverlaufs notwendig ist. Aufgrund der Unabhängigkeit der einzelnen Federfunktionen reduzieren sich die Federtoleranzen bei der Verwendung von nur einer Feder für das Federelement. Durch einfache Bauelemente in geringer Anzahl entsteht eine kompakte Konstruktion des Federelements.

Bei einer weiteren bevorzugten Ausführung der Erfindung ist das Federelement im Getriebegehäuse angebracht. Es sind dazu vorteilhafterweise keine Gehäusedurchbrüche notwendig, da eine Montage von innen an das Getriebegehäuse möglich ist.

Ist das Federelement in einem Gehäuse oder auf einer Grundplatte vormontiert, wird zusätzlich eine Modulbauweise möglich, bei einfacher Getriebegehäusebearbeitung.

Ein bevorzugtes Ausführungsbeispiel der Erfindung beschreibt die nachfolgende Beschreibung mit der zugehörigen Zeichnung. Es zeigen
- Figur 1: den mit einem Federelement gemäß der Erfindung erzielten qualitativen Wählkraftverlauf.
- Figur 2: das Federelement mit Wählschwinge, eingebaut im Getriebegehäuse, in einem Teilschnitt des Getriebes,
- Figur 3: einen Teil des Federelements mit Wählschwinge, nötig zum Erzeugen der Wählkraft für den Rückwärtsgang,
- Figur 4: einen Teil des Federelements mit Wählschwinge, nötig zum Erzeugen der Wählkraft für die Schaltgasse des fünften und sechsten Ganges,
- Figur 5: das Federelement mit Wählschwinge in Neutralstellung.

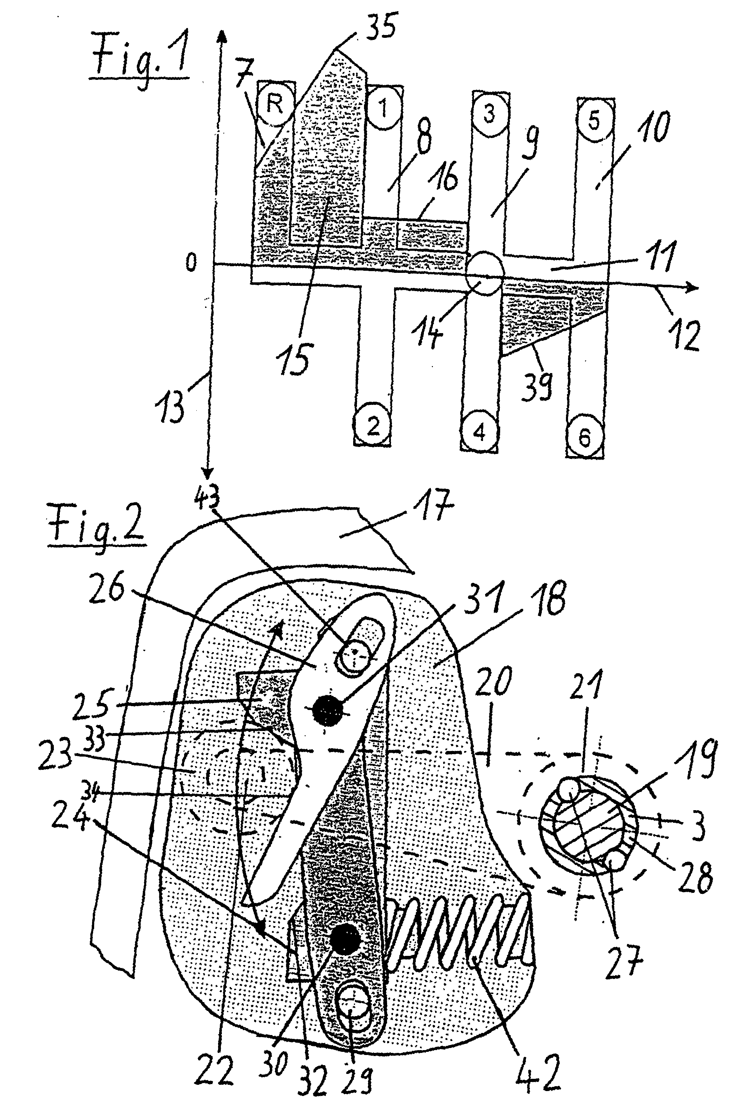

In Figur 1 ist qualitativ ein Wählkraftverlauf dargestellt, der mit einem Federelement gemäß der Erfindung erzielt wird. Über einem Schaltschema mit vier Schaltgassen 7, 8, 9, 10 und einer Wählgasse 11 ist an einer Abszisse 12 der Wählweg über der Wählkraft an einer Ordinate 13 aufgetragen. Ein Schalthebel 14 befindet sich dabei in seiner Neutralstellung in der Wählgasse 11 in Höhe der Schaltgasse 9 für den dritten und vierten Gang. Die Endstellungen des Schalthebels 14 in den Schaltgassen 7, 8, 9, 10 nach dem Einlegen der jeweiligen Gänge sind durch die Ziffern 1 bis 6 und den Buchstaben R dargestellt. Dabei entsprechen die Ziffern dem eingelegten Gang und R bedeutet eingelegter Rückwärtsgang. Die schattierte Fläche 15 mit ihrer Begrenzungskurve 16 entspricht der Größe der Wählkraft. Es ist ersichtlich, daß sich die Wählkraft jeweils beim Verlassen einer Schaltgasse 7, 8, 9, 10 in einem Sprung verändert. Beim Bewegen des Schalthebels 14 von der Schaltgasse 9 für den dritten und vierten Gang in die Schaltgasse 8 für den ersten und zweiten Gang behält die Wählkraft einen gleichbleibenden Wert, während sie beim Bewegen des Schalthebels 14 von der Schaltgasse 9 in die Schaltgasse 10 für den fünften und sechsten Gang nach sprunghaftem Anstieg konstant abfällt. Beim Bewegen des Schalthebels 14 von der Schaltgasse 8 für den ersten und zweiten Gang in die Schaltgasse 7 für den Rückwärtsgang steigt die Wählkraft nach sprunghaftem Anstieg noch kurz konstant an, um dann bis zum Erreichen der Schaltgasse 7 wiederum konstant abzufallen.

Ein solcher Verlauf der Wählkraft wird mit dem Federelement aus Figur 2 erreicht. In einem angedeutet im Schnitt gezeichneten Getriebegehäuse 17 ist das in einem Gehäuse 18 vormontierte Federelement mit nicht gezeichneten Mitteln angebracht. In dem Getriebegehäuse 17 ist eine zentrale Wähl- und Schaltwelle 19 geführt. Diese Wähl- und Schaltwelle 19 wird während der Wahl einer in dieser Figur nicht dargestellten Schaltgasse 7, 8, 9, 10 mittels des in dieser Figur ebenfalls nicht dargestellten Schalthebels 14 verdreht und beim anschließenden Schalten einer innerhalb dieser Schaltgasse 7, 8, 9, 10 liegenden Gangstufe axial verschoben. Die Wähl- und Schaltwelle 19 nimmt nicht gezeichnete Schaltfinger auf, die je nach Ausbildung der Schaltung in mit nicht gezeichneten Schaltgabeln verbundenen Schaltschienen selektiv eingreifen oder in unmittelbar an nicht gezeichnete Schaltmuffen angreifenden Schaltschwingen selektiv die Gangschaltung vollziehen.

In dem Getriebegehäuse 17 ist weiterhin eine als einarmiger Hebel ausgebildete gestrichelt gezeichnete Wählschwinge 20 mittels ihrer Nabe 21 verdrehbar gelagert. Diese Wählschwinge 20 nimmt an ihrem radial vorstehenden Ende eine auf einem gestrichelt gezeichneten Bolzen 22 gelagerte, gestrichelt gezeichnete Rolle 23 auf, die, gegen in ihrem Schwenkbereich liegende Schlepphebel 24, 25, 26 des Federelements bewegbar ist.

Über radiale Führungsnuten in Wähl- und Schaltwelle 19 bzw. Nabe 21 der Wählschwinge 20 und darin befindlichen Kugeln 27, die in einem zylindrischen Käfig 28 geführt sind, ist die Wähl- und Schaltwelle 19 axial verschiebbar in der Nabe 21 der Wählschwinge 20 gelagert. Dabei sind Wählschwinge 20 und Wähl- und Schaltwelle 19 in Umfangsrichtung durch die Kugeln 27 formschlüssig miteinander verbunden, so daß bei einer Wählbewegung des nicht gezeichneten Schalthebels 14 die Wählschwinge 20 mit der Wähl- und Schaltwelle 19 verdreht wird, während sie bei einer Schaltbewegung der Wähl- und Schaltwelle 19 ihre Lage beibehält.

Die Schlepphebel 24, 25, 26 dienen zusammen mit einer Feder 42 zur Erzeugung eines Wählkraftverlaufs gemäß Figur 1. Dazu ist der Schlepphebel 24 zur Erzeugung der Wählkraft für den Rückwärtsgang im Gehäuse 18 des Federelements über einen Gelenkpunkt 43 verdrehbar und an der Feder 42 abgestützt gelagert. Der Schlepphebel 25 zur Erzeugung der Wählkraft für die Schaltgasse des fünften und sechsten Ganges ist über einen weiteren Gelenkpunkt 29 an dem Gehäuse 18 des Federelements verdrehbar und in Längsrichtung verschiebbar gelagert und zusätzlich über eine Gelenkverbindung 30 mit dem Schlepphebel 24 verdrehbar verbunden. Der Schlepphebel 26 zur Erzeugung der Wählkraft für die Schaltgasse des ersten und zweiten Ganges ist wiederum verdrehbar und in Längsrichtung verschiebbar über den Gelenkpunkt 43 am Gehäuse 18 des Federelements gelagert und verdrehbar über eine weitere Gelenkverbindung 31 mit dem Schlepphebel 25 verbunden.

Die Schlepphebel 24, 25, 26 sind so gestaltet, daß sie mit Wirkflächen 32, 33, 34 die Rolle 23 der Wählschwinge 20 zangenartig einfassen und diese so spielfrei in ihrer Neutralstellung der Schaltgasse für den dritten und vierten Gang festlegen. Durch die Konturen der Wirkflächen 32, 33, 34 gestaltet sich der stetige Verlauf der Wählkraftkurve, während sich die Sprünge im Wählkraftverlauf dadurch ergeben, daß mindestens ein anderer Schlepphebel 24, 25, 26 mit der Rolle 23 der Wählschwinge 20 in Kontakt kommt.

Um dieses zu gewährleisten, besitzt die Rolle 23 die Breite aller Schlepphebel 24, 25, 26 zusammen.

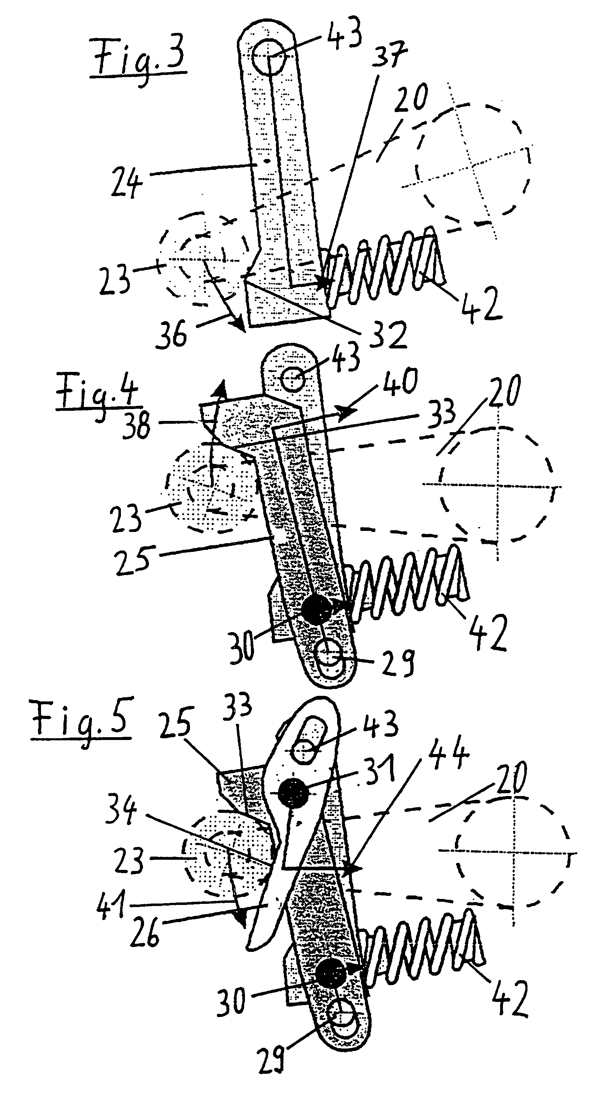

Figur 3 zeigt die Wählschwinge 20 in Anlage am Schlepphebel 24 beim Einlegen des Rückwärtsganges. Die Kontur der Wirkfläche 32 bewirkt die Steigungsänderung der Kurve für den Wählkraftverlauf 35, dargestellt in Figur 1. Der Pfeil 36 deutet die Bewegungsrichtung der Wählschwinge 20 an und der Pfeil 37 die Bewegungsrichtung des Schlepphebels 24.

Figur 4 zeigt mit dem Pfeil 38 die Bewegungsrichtung der Wählschwinge 20 beim Wählen der Schaltgasse 10 für den fünften und sechsten Gang. Dabei liegt die Rolle 23 der Wählschwinge 20 an der Wirkfläche 33 des Schlepphebels 25 an, deren Kontur den abfallenden Verlauf 39 der Wählkraftkurve aus Figur 1 verursacht. Der Schlepphebel 25 bewegt sich dabei in Richtung des Pfeils 40.

Figur 5 zeigt die Wählschwinge 20 in ihrer Neutralstellung, der Schaltgasse 9 für den dritten und vierten Gang. Zum Einlegen der Schaltgasse 8 für den ersten und zweiten Gang ist die Wählschwinge 20 in Richtung des Pfeiles 41 zu verdrehen.

Dabei wälzt die Rolle 23 der Wählschwinge 20 an der Wirkfläche 34 des Schlepphebels 26 ab, zur Erzeugung der Wählkraft für die Schaltgasse 8 des ersten und zweiten Ganges. Der Schlepphebel 26 bewegt sich in Richtung des Pfeiles 44. In der Neutralstellung der Wählschwinge 20 wird die Rolle 23 zangenartig von den Wirkflächen 33, 34 der Schlepphebel 25, 26 eingefaßt, was eine spielfreie Festlegung der Wählschwinge 20 bewirkt.

## Patentansprüche

1. Schalteinrichtung mit Federelement für ein mehrgängiges Zahnräderwechselgetriebe eines Kraftfahrzeugs,
mit einer zentralen Wähl- und Schaltwelle (19), die in einem Getriebegehäuse (17) verdrehbar und axial verschiebbar gelagert ist, wobei durch deren Verdrehung jeweils eine in einer Schaltgasse (7, 8, 9, 10) zu betätigende Schaltkupplung anwählbar und durch deren anschließende axiale Verschiebung Gangstufen (1,2,3,4,5,6,R) schaltbar sind,
mit einer als Hebel ausgebildeten Wählschwinge (20), die drehfest bezüglich der Wähl- und Schaltwelle (19) geführt ist und die gegen die Kraft des Federelementes aus ihrer Neutral- in mindestens eine Wählendstellung verschwenkbar ist,
wobei das Federelement aus mindestens zwei, gegen die Kraft mindestens einer Feder (42) beweglichen, Schlepphebeln (24, 25, 26) besteht, die unter Vorspannung an der Wählschwinge (20) anliegen und diese in ihrer Neutralstellung festlegen
**dadurch gekennzeichnet, daß**
die Wählschwinge (20) axial verschiebbar bezüglich der Wähl- und Schaltwelle (19) geführt ist und dass
das Federelement aus drei Schlepphebeln (24, 25, 26) und einer Feder (42) besteht, die so zusammenwirken, dass ausgehend von der Neutralstellung der Wähl- und Schaltwelle (19) in einer Schaltgasse (9) drei weitere Schaltgassen (7, 8, 10) jeweils mit mindestens je einer Wählkrafterhöhung anwählbar sind.

2. Schalteinrichtung nach Anspruch 1, **dadurch gekennzeichnet, daß** das Federelement innen am Getriebegehäuse (17) angebracht ist.

3. Schalteinrichtung nach Anspruch 2, **dadurch gekennzeichnet, daß** das Federelement in einem Gehäuse (18) oder auf einer Grundplatte angeordnet ist.

## Claims

1. A shift means comprising a spring element for a multi-speed toothed-wheel change gear of a vehicle,
comprising a central selector and gearshift shaft (19) mounted for rotation and axial displacement in a gearbox (17), the shaft being rotated so as to select a respective clutch for actuation in a gearshift channel (7, 8, 9, 10) and then axially displaced in order to engage gears (1, 2, 3, 4, 5, 6, R), and
comprising a selector arm (20) in the form of a lever guided so as to be co-rotatable with the selector and shift shaft (19) and pivotable out of its neutral position into at least one selector end position against the force of the spring element,
wherein the spring element comprises at least two drag levers (24, 25, 26) movable against the force of at least one spring (42) and abutting the selector arm (20) under prestress and securing it in its neutral position,
**characterised in that**
the selector arm (20) is guided so as to be axially movable relative to the selector and shift shaft (19), and
the spring element comprises three drag levers (24, 25, 26) and a spring (42) which co-operate so that, starting from the neutral position of the selector and shift shaft (19) in a shift channel (9), three further shift channels (7, 8, 10) can be selected by at least one respective increase in the selector force.

2. A shift means according to claim 1, **characterised in that** the spring element is internally mounted in the gearbox (17).

3. A shift means according to claim 2, **characterised in that** the spring element is disposed in a casing (18) or on a baseplate.

## Revendications

1. Dispositif de changement de vitesse avec élément de ressort de rappel pour une boîte de vitesses à plusieurs rapports et pignons pour un véhicule automobile, comprenant
- un axe central de sélection et de commutation (19) monté coulissant axialement et rotatif dans un boîtier (17) et qui par rotation permet de sélectionner un couloir de commutation (7, 8, 9, 10) puis la commutation dans le rapport de vitesses (1, 2, 3, 4, 5, 6, R), par coulissement axial,
- un bras de sélecteur (20) en forme de levier guidé solidaire en rotation de l'axe de sélection et de commutation (19) et pouvant être dégagé contre la force de l'élément de ressort de sa position neutre dans au moins une position de sélection,
- l'élément de ressort se composant d'au moins deux leviers tirés (24, 25, 26) mobiles contre la force d'au moins un ressort (42) et qui reposent précontraints sur le bras de sélecteur (20) et maintiennent celui-ci dans sa position neutre,
**caractérisé en ce que**
le bras de sélecteur (20) coulisse axialement par rapport à l'axe central de sélection et de commutation (19) et l'élément de ressort se compose de trois leviers tirés (24, 25, 26) et d'un ressort (42) qui coopèrent et de sorte que partant de la position neutre de l'axe (19), dans un couloir de commutation (9), on peut sélectionner trois autres couloirs de commutation (7, 8, 10) à chaque fois, avec au moins une augmentation de la force de sélection.

2. Dispositif de changement de vitesse selon la revendication 1,
**caractérisé en ce que**
l'élément de ressort est installé dans la boîte de vitesses (17).

3. Dispositif de changement de vitesse selon la revendication 2,
**caractérisé en ce que**
l'élément de ressort est disposé dans un boîtier (18) ou sur une plaque de base.
